# EUROPÄISCHE PATENTSCHRIFT

(11) **EP 3 810 941 B1**
(45) Veröffentlichungstag und Bekanntmachung des Hinweises auf die Patenterteilung: **04.06.2025**
(21) Anmeldenummer: 19737668.4
(22) Anmeldetag: 21.06.2019
(51) Int. Cl.: F16B 25/00

(54) **SCHRAUBE ZUR VERSCHRAUBUNG IN KUNSTSTOFF**
SCREW FOR SCREWING INTO PLASTIC
VIS DESTINÉE À ÊTRE VISSÉE DANS DE LA MATIÈRE PLASTIQUE

(30) Priorität: 21.06.2018 DE 102018114984
(43) Veröffentlichungstag der Anmeldung: 28.04.2021
(73) Patentinhaber: EJOT SE & Co. KG, 57319 Bad Berleburg (DE)
(72) Erfinder: ACHENBACH, Michael, 35236 Breidenbach (DE); BIRKELBACH, Ralf, 57334 Bad Laasphe (DE); DIECKMANN, Volker, 57319 Bad Berleburg (DE); DRATSCHMIDT, Frank, 57319 Bad Berleburg (DE); HELLMIG, Ralph J., 57334 Bad Laasphe (DE); SELIMI, Ilir, 35216 Biedenkopf (DE); WEITZEL, Stephan, 57334 Bad Laasphe (DE); HACKLER, Jan, 57319 Bad Berleburg (DE); BEHLE, Juergen, 57334 Bad Laasphe (DE); GERBER, René, 35112 Fronhausen (DE)
(74) Vertreter: Puschmann Borchert Kaiser Klettner Patentanwälte Partnerschaft mbB
(86) Internationale Anmeldenummer: PCT/EP2019/066531
(87) Internationale Veröffentlichungsnummer: WO 2019/243606

(56) Entgegenhaltungen:
- EP-A2- 1 887 233
- DE-A1- 102015 120 470
- DE-A1- 2 543 960
- JP-A- 2002 089 525
- US-A- 3 861 269
- US-A1- 2017 254 352

## Beschreibung

Die Erfindung betrifft eine Schraube, insbesondere zur Verschraubung in Kunststoff, gemäß dem Oberbegriff des Anspruchs 1.

Die US 5,795,120 B, die EP 1 877 233 A2, JP 5243906 B2,sowie die DT 25 43 960 A1, offenbaren jeweils eine Schraube zum Einbringen in ein mit einem Vorloch versehenen Bauteil. Die Schraube weist einen Formgewindebereich und einen Traggewindebereich auf, wobei das Gewindeprofil im Formgewindebereich proportional größer ist als das Gewindeprofil im Traggewindebereich.

Diese Gestaltung hat den Nachteil, dass insbesondere bei der Verwendung der Schraube in Kunststoffen eine hohe Belastung des Bauteils erfolgt, wenn eine größere Steigung und ein geringerer Flankenwinkel verwirklicht werden sollen.

Eine ähnliche Schraube, insbesondere Betonschraube, wie in der EP 1 887 233 A2 ist in der DE 10 2015 120 470 A1 offenbart, wobei in diesem Fall neben der bekannten Reduzierung des Außendurchmessers auch ein Flankenwinkel vorliegen kann, der im Bereich des Furchgewindes größer als im Bereich des Traggewindes ist.

Die EP 2 703 658 B1 offenbart eine Schraube für weiche Werkstoffe mit unterschiedlichen Flankenwinkeln in einem Formbereich und eine Tragbereich, wobei ein Steigungssprung zwischen dem Formbereich und dem Tragbereich vorgesehen ist, um den entstandenen Spalt auszugleichen und dadurch die Befestigungskräfte zu erhöhen.

Es ist Aufgabe der Erfindung, eine Schraube anzugeben, die bei geringem Einschraubmoment eine geringe mechanische Belastung des Bauteils erzielt und dabei hohe Auszugswerte realisieren kann.

Die Aufgabe wird durch die kennzeichnenden Merkmale des Anspruchs 1 in Verbindung mit seinen Oberbegriffsmerkmalen gelöst.

Die Unteransprüche bilden vorteilhafte Weiterbildungen der Erfindung.

In bekannter Weise weist eine Schraube eine Schraubenmittelachse, einen Antrieb und einen gewindetragenden Schaft auf. Der Schaft trägt wenigstens einen Gewindegang, der sich wenigstens bereichsweise in einer Helix konstanter Steigung entlang des Schafts erstreckt und so ein Hauptgewinde mit einer sich ändernden Profilkontur bildet, das über seine Länge einen mittleren Gewinderadius aufweist. Die Profilkontur ist durch den Schnitt des Gewindegangs in einer Schnittebene der Helix gebildet, wobei die Schraubenmittelachse in der Schnittebene liegt. Der Gewinderadius ist der maximale orthogonale Abstand von der Schraubenmittelachse zur Profilkontur des Gewindegangs. Das Hauptgewinde weist einen Tragbereich und einen Formbereich auf, wobei sich im Formbereich eine Formprofilkontur mit einem Formbereichsradius und im Tragbereich eine Tragprofilkontur mit einem Tragbereichsradius ergibt.

Die Formprofilkontur wird durch die Projektion des Gewindegangs entlang der Helix, insbesondere in Richtung des Antriebs über einen sich axial erstreckenden Bereich einer Länge von dreimal dem mittleren Gewinderadius ausgehend vom freien Ende des Schafts auf eine Schnittebene der Helix definiert, wobei die Schraubenmittelachse M in der Schnittebene liegt. Die Projektion entspricht also der Projektion der geradlinigen Abwicklung des Gewindegangs auf eine Schnittebene der Helix, in der die Schraubenmittelachse liegt. Dadurch ergibt sich eine Formprofilkontur mit einer maximalen Ausdehnung, die die wirksame Formprofilkontur abbildet. Diese Formprofilkontur weist einen maximalen orthogonalen Abstand zur Schraubenmittelachse auf, wodurch der Formbereichsradius definiert ist.

Der Formbereich endet an der Stelle der Helix, an der die dem Antrieb nächstliegende maximale Ausdehnung der Formprofilkontur im Bereich von 85% des mittleren Gewinderadius in Radialrichtung nach außen vorliegt, bevor die nachfolgenden Profilkonturen wieder innerhalb der Formprofilkontur liegen.

Die Tragprofilkontur wird durch die Projektion des Gewindegangs auf eine Schnittebene der Helix entlang der Helix, insbesondere in Richtung des Antriebs, über einen sich axial erstreckenden Bereich gebildet, der bei einem Abstand von 2/3 des mittleren Gewinderadius zum Formbereichsende beginnt und bei 5/3 des mittleren Gewinderadius endet. Dieser Bereich bildet wenigstens einen Teilbereich des Tragbereichs. Dieser kann sich weiter entlang des Hauptgewindes in Richtung des Antriebs erstrecken, so lange die Profilkontur die Tragprofilkontur nicht überragt. Diese Tragprofilkontur weist einen maximalen orthogonalen Abstand zur Schraubenmittelachse auf, wodurch der Tragbereichsradius definiert ist.

Auf diese Weise ist sichergestellt, dass ein möglichst kurzer Übergangsbereich vom Formbereich zum Tragbereich gewährleistet und ein ausreichend langer Tragbereich gegeben ist, sodass eine grundlegende Haltefunktion der Schraube erfüllt ist.

Ferner sind Tragprofilkontur und Formprofilkontur so aufeinander abgestimmt, dass bei einer Überlagerung der Tragprofilkontur und der Formprofilkontur entlang der Helix wenigstens in dem Bereich, der sich von 85% des Formbereichsradius in Radialrichtung nach außen erstreckt, die Tragprofilkontur vollständig innerhalb der Formprofilkontur liegt.

Dies sorgt dafür, dass einem Rückfedern des Materials im gefurchten Muttergewinde Rechnung getragen und ein geringes Eindrehmoment realisiert werden kann.

Erfindungsgemäß ist vorgesehen, dass die Formprofilkontur eine Formprofilfläche begrenzt, die gemessen in einem Bereich von 10% des Formbereichsradius ausgehend vom maximalen orthogonalen Abstand der Formprofilkontur zur Schraubenmittelachse radial nach innen größer ist als eine durch die Tragprofilkontur begrenzte Tragprofilfläche, gemessen in einem Bereich von 10% des Formbereichsradius ausgehend vom maximalen orthogonalen Abstand der Tragprofilkontur zur Schraubenmittelachse radial nach innen.

Durch die erfindungsgemäße Profilkonturabstimmung kann der Ausgleich der Rückfederung im Muttergewinde auch bei relativ kleinen Flankenwinkeln realisiert werden, wobei eine ausreichende Flankenüberdeckung gewährleistet ist. Dabei wird eine Beschädigung des Bauteilmaterials, wie dies bei einer Schraube mit einem proportional vergrößerten Formbereichsgewinde eintritt, verhindert.

Bevorzugt weisen die Formprofilkontur und die Tragprofilkontur einen Flankenwinkel von weniger als 35° auf. Der Flankenwinkel der Formprofilkontur entspricht 180° abzüglich der Summe der beiden Basiswinkel eines Trapezes, das gebildet wird, indem die Grundseiten des Trapezes durch die zur Schraubenachse parallelen Schnittlinien bei 85% des Formprofilradius R_{F} und bei 95% des Formprofilradius R_{F} gebildet werden. Basiswinkel sind die Winkel an der längeren Grundseite des Trapezes, also bei der Schnittlinie bei 85%.

Die analoge Vorschrift zur Ermittlung des Flankenwinkels ergibt sich für die Tragprofilkontur, wobei hier die Schnittlinien bei 85% des Tragprofilradius R_{T} und 95 % des Tragprofilradius R_{T} gelegt werden.

Der Flankenwinkel beträgt insbesondere zwischen 20° und 30°. Dies ist ein für Kunststoffverschraubung bewährter Flankenwinkel.

Gemäß einer vorteilhaften Weiterbildung der Erfindung ist der Tragbereichsradius zwischen 1% bis 3% kleiner als der Formbereichsradius. Dies hat zur Folge, dass nur eine möglichst geringe Materialschädigung des Kunststoffbauteils eintritt, aber dennoch ein ausreichend großer Abstand zwischen Formprofilkontur und Tragprofilkontur, der die Materialrückfederung abbildet, eingestellt werden kann.

Besonders vorteilhaft ist es, wenn die Tragprofilkontur bei 95% des Tragbereichsradius eine axiale Breite aufweist, die kleiner ist als die axiale Breite der Formprofilkontur bei 95% des Formbereichsradius. Dies ermöglicht eine einfache Gestaltung des Gewindeprofils, so dass die Formprofilfläche größer ist als die Tragprofilfläche.

Insbesondere ist die Breite der Tragprofilkontur wenigstens 10%, insbesondere wenigstens 20% kleiner als die Breite der Formprofilkontur.

Zum Zweck einer einfacheren Herstellung können die Formprofilkontur und / oder die Tragprofilkontur symmetrisch sein.

Gemäß einer besonders vorteilhaften Ausgestaltung ist der Formbereich kleiner als 2 x die Steigung. Bevorzugt wächst der Gewindegang bis zu seiner Formprofilkontur an und bleibt dann über einen Bereich bis zum Ende des Formbereichs konstant.

Bevorzugt kann das Verhältnis von Kernradius zu mittlerem Gewinderadius 0,6 bis 0,8 betragen. Dies sind für Kunststoffschrauben übliche Verhältnisse.

Ferner kann in einer Weiterbildung der Erfindung vorgesehen sein, dass in dem Bereich, der sich radial innerhalb von 85% des Formbereichsradius erstreckt, die Tragprofilkontur wenigstens teilweise außerhalb der Formprofilkontur liegt. Dadurch kann eine flexiblere Gestaltung des Flankenübergangs zum Gewindegrund ermöglicht werden, wodurch den Materialeigenschaften besser Rechnung getragen werden kann.

Weiter bevorzugt kann vorgesehen sein, dass der Kerndurchmesser im Formbereich kleiner oder gleich dem Kerndurchmesser im Tragbereich ist.

Gemäß einer weiteren vorteilhaften Ausgestaltung der Erfindung kann der Schaft am freien Ende des Schraubenschaftes ein Ansetzgewinde aufweisen, wobei das Ansetzgewinde wenigstens zwei Ansetzgewindegänge umfasst, die in ihrem Radius höchstens 90% des Formbereichsradius erreichen und einen Ansetzbereich bilden.

Der Ansetzgewindebereich wird dort gebildet, wo die Ansetzgewindegänge den gleichen Durchmesserverlauf aufweisen und zudem der Gewinderadius des Hauptgewindes kleiner oder gleich dem Gewinderadius der Ansetzgewindegänge ist.

Dies hat den Vorteil, dass die Schraube besonders gerade angesetzt werden kann, was zur Folge hat, dass das durch den nachfolgenden Formbereich im Kunststoffteil gefurchte Muttergewinde und das dem Formbereich nachfolgende Gewinde des Tragbereichs möglichst exakt ausgerichtet sind, so dass der Rückfederung des Kunststoffs genau Rechnung getragen werden kann. Auf diese Weise kann die Reibung des Tragbereichs während des Einschraubens weiter reduziert oder sogar verhindert werden.

Bevorzugt ist vorgesehen, dass das Hauptgewinde im Ansetzbereich bei demselben axialen Abstand zum freien Ende des Schraubenschafts den gleichen Gewinderadius wie das Ansetzgewinde aufweist. Auf diese Weise werden durch die, insbesondere zwei, Ansetzgewindegänge und dem Hauptgewinde wenigstens drei gleiche Ansetzpunkte realisiert, die ein besonders gerades Ansetzen der Schraube ermöglichen.

Bevorzugt haben alle Gewindegänge im Ansetzbereich ihren Anfang in derselben Querschnittsebene. Ferner weisen alle Gewindegänge im Ansetzbereich die gleiche Querschnittskontur auf. Sie sind also gleichartig ausgebildet. So beginnen beispielsweise der Hauptgewindegang und die beiden Ansetzgewindegänge gleich und haben den gleichen Verlauf.

Alternativ können auch wenigstens drei Ansetzgewindegänge vorgesehen sein, wobei dann der Gewinderadius des Hauptgewindes im Ansetzbereich insbesondere kleiner als der Radius des Ansetzgewindes ist.

Gemäß einer vorteilhaften Weiterbildung der Erfindung beginnen die Ansetzgewindegänge am Kern, wobei sich ausgehend vom Kern der Radius der Ansetzgewinde bis zum Ende des Ansetzbereichs stetig vergrößert. Dies sorgt für ein kontinuierliches und gleichmäßiges Ansetzen der Schraube.

Ferner können die Gewindegänge mit gleichem Gewinderadius auf gleicher axialer Höhe im Ansetzbereich umfänglich gleichverteilt sein. Auf diese Weise wird eine symmetrische Anlage am Vorloch des Kunststoffbauteils gewährleistet.

Insbesondere beträgt der Durchmesser des freien Endes der Schraube wenigstens 20%, insbesondere wenigstens 30%, insbesondere wenigstens 40%, insbesondere wenigstens 50%, insbesondere wenigstens 60% des doppelten Formbereichsradius. Eine solche stumpfe Spitze ist bei Kunststoffschrauben üblich.

Das Ansetzgewinde kann unmittelbar ans freie Schraubenende anschließen. Dies sorgt dafür, dass mit dem ersten Ansetzen eine ideale Führung der Schraube erreicht ist.

Alternativ dazu kann das Ansetzgewinde beabstandet zum freien Schraubenende beginnen. Auf diese Weise kann der Bereich zum Schraubenende hin eine Suchfunktion erfüllen.

Zum Zwecke einer einfachen Herstellung können das Ansetzgewinde und das Hauptgewinde gewalzte Gewinde sein.

Gemäß einer weiteren vorteilhaften Ausgestaltung können die Gewinde im Ansetzbereich einen stumpferen Flankenwinkel aufweisen als das Hauptgewinde außerhalb des Ansetzbereichs. Dies hat den Vorteil einer guten Zentrierung ohne einseitiges Einfurchen der Ansetzgewindegänge und erleichtert die Wiederholmontage.

Die Ansetzgewindegänge können am Ende des Ansetzbereichs abrupt auslaufen. Dies hat den Vorteil, dass beim weiteren Eindrehen der Schraube in ein enges Vorloch die Reibung minimiert ist.

Das Ansetzgewinde kann sich gemäß einer weiteren vorteilhaften Weiterbildung höchstens über zwei Windungen erstrecken. Dies fördert eine effiziente Verschraubung, wobei dennoch eine optimale Ausrichtung der Schraube gewährleistet ist.

Es können in einem Gewindegang Unterbrechungen der Gewindegänge vorgesehen sein, wobei jedoch der interpolierte Verlauf des Gewinderadius gleichbleibt.

Gemäß einem weiteren Aspekt der Erfindung betrifft diese ein Verfahren zur Herstellung einer Schraubverbindung umfassend eine vorbeschriebene erfindungsgemäße Schraube. Die erfindungsgemäße Schraube wird dabei in ein Vorloch in ein Bauteil aus Kunststoff eingedreht, wobei im Formbereich ein Gegengewinde oder Muttergewinde mit der Formprofilkontur in den Kunststoff eingeformt wird. Das Gegengewinde federt, sobald es nicht mehr mit dem Formbereich in Eingriff steht im Tragbereich wieder zurück, so dass das Muttergewinde während des Einschraubvorgangs gerade nicht in Anlage mit dem Gewinde im Tragbereich kommt. Das Gewinde im Tragbereich wird erst mit dem endgültigen Anziehen der Schraube im Bauteil gegen das Gegengewinde gedrückt.

Bevorzugt wird die erfindungsgemäße Schraube in ein Vorloch eingeschraubt, dessen Radius etwa 80% des Formbereichsradius entspricht.

Ferner betrifft die Erfindung eine nach dem vorangehend beschriebenen Verfahren hergestellte Schraubverbindung.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Zeichnung bedeutet:
- Fig. 1: eine Seitenansicht einer erfindungsgemäßen Schraube;
- Fig. 2: eine perspektivische Ansicht der Abwicklung des Gewindegangs;
- Fig. 3a: eine perspektivische Ansicht der Abwicklung des Gewindegangs über 3 x R_{M};
- Fig. 3b: eine Vorderansicht der Abwicklung des Gewindegangs;
- Fig. 3c: die aus der Projektion des abgewickelten Gewindegangs erhaltene Formprofilkontur;
- Fig. 4: eine perspektivische Ansicht des abgewickelten Gewindegangs mit Abbildung des Formbereichsendes;
- Fig. 5a: eine perspektivische Ansicht des abgewickelten Gewindegangs im Tragbereich;
- Fig. 5b: eine Vorderansicht des abgewickelten Gewindegangs;
- Fig. 5c: eine sich durch Projektion ergebende Traggewindekontur;
- Fig. 6: eine Überlagerung der Formgewindekontur aus Fig. 3c und der Traggewindekontur aus Fig. 5c
- Fig. 7: eine Vergrößerung der Überlagerung gemäß Fig. 6;
- Fig. 8a: eine Darstellung der Formprofilfläche;
- Fig. 8b: eine Darstellung der Tragprofilfläche;
- Fig. 9: eine Darstellung des Formprofilflankenwinkels;
- Fig. 10: eine Überlagerung einer Formprofilkontur und einer Tragprofilkontur;
- Fig. 11: eine Überlagerung einer Formprofilkontur und einer Tragprofilkontur;
- Fig. 12: eine Seitenansicht einer erfindungsgemäßen Schraube mit einem Ansetzgewinde;
- Fig. 13a: eine Vergrößerung des Ansetzbereichs aus Fig. 12;
- Fig. 13b: ein Querschnitt durch den Ansetzbereich;
- Fig. 13c: ein weiterer Querschnitt durch den Ansetzbereich;
- Fig. 13d: einen Querschnitt durch den Schraubenschaft außerhalb des Ansetzbereichs;
- Fig. 14: eine Schnittansicht einer erfindungsgemäßen Schraubverbindung
- Fig. 15a: eine Vergrößerung des Formgewindebereichs aus Fig. 14
- Fig. 15b: eine Vergrößerung des Traggewindebereichs aus Fig. 14

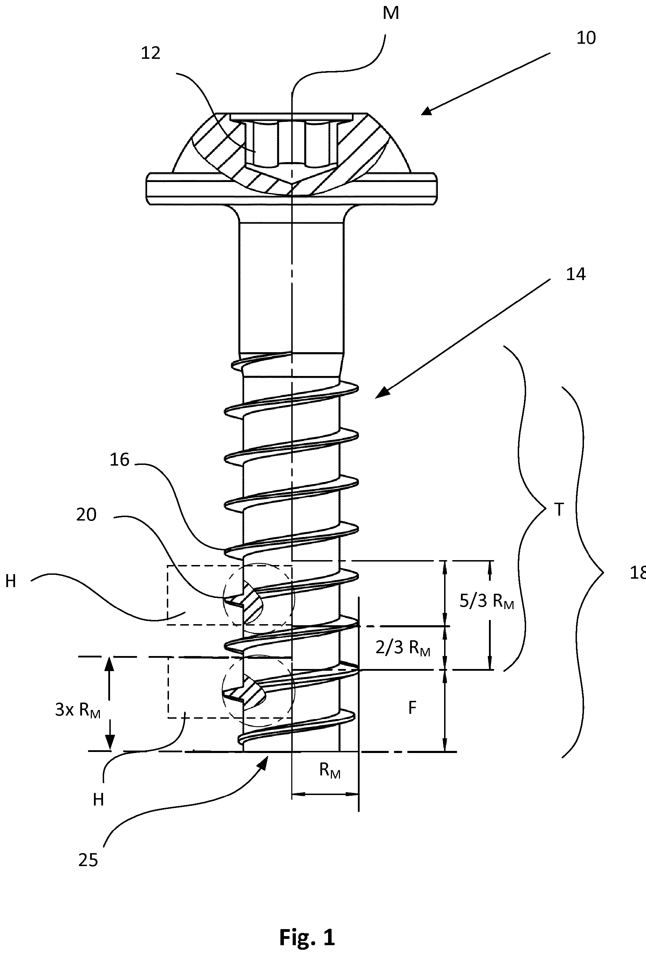

Fig. 1 zeigt eine Seitenansicht einer erfindungsgemäßen Schraube 10, umfassend eine Schraubenmittelachse M, einen Antrieb 12 und einen gewindetragenden Schaft 14. Die Richtung entlang der Schraubenmittelachse M wird im Weiteren als axiale Richtung bezeichnet. Der Schaft 14 trägt wenigstens einen Gewindegang 16, der sich in einer Helix konstanter Steigung entlang des Schafts erstreckt und so ein Hauptgewinde 18 mit einer sich ändernden Profilkontur 20 bildet. Das Hauptgewinde 18 weist über seine Länge einen mittleren Gewinderadius R_{M} auf. Der mittlere Gewinderadius R_{M} ist der durchschnittliche Gewinderadius über das Hauptgewinde 18 und wird regelmäßig zwischen dem Formbereichsradius und dem Tragbereichsradius liegen. Der mittlere Gewinderadius R_{M} wird daher annähernd dem Nennradius entsprechen.

Die Profilkontur 20 ist durch den Schnitt des Gewindegangs in einer Schnittebene H der Helix gebildet, in der die Schraubenmittelachse M liegt.

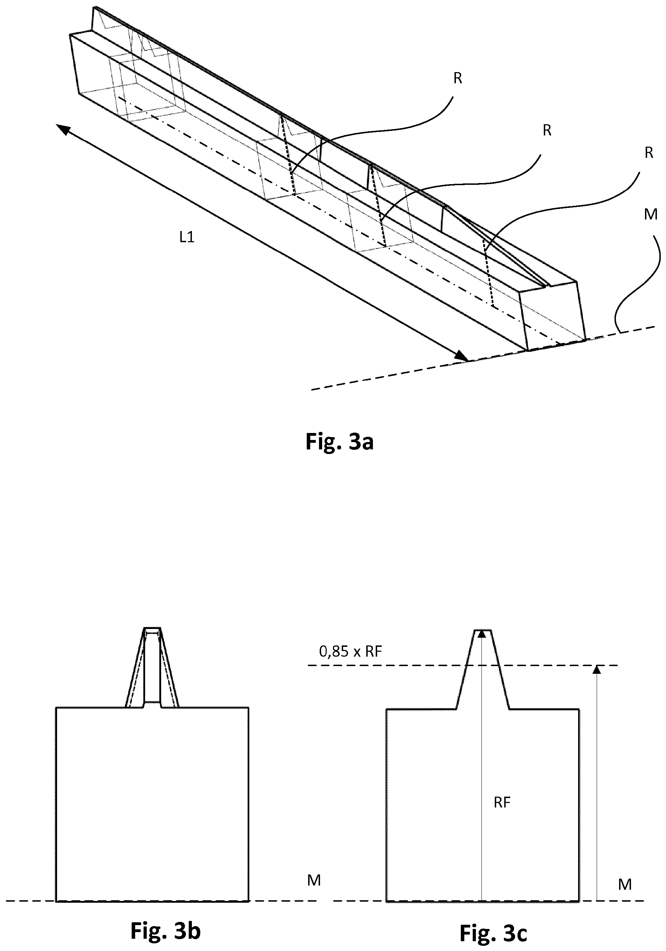

Der Gewinderadius R ist als der maximale orthogonale Abstand von der Schraubenmittelachse M zur Profilkontur 20 des Gewindegangs 16 definiert. Dies ist in Fig. 3a näher erläutert.

Das Hauptgewinde 18 weist einen Tragbereich T und einen Formbereich F auf, wobei sich im Formbereich eine Formprofilkontur 24 mit einem Formbereichsradius R_{F} und im Tragbereich T eine Tragprofilkontur 22 mit einem Tragbereichsradius R_{T} ergibt.

Die Formprofilkontur 24 wird durch die Projektion des Gewindegangs 16 entlang der Helix über einen sich axial erstreckenden Bereich einer Länge von dreimal dem mittleren Gewinderadius (3 x R_{M}) ausgehend vom freien Ende des Schafts 25 auf eine Schnittebene der Helix H definiert. Diese ist in der Fig. 3c näher beschrieben.

Die Projektion entspricht also der Projektion der geradlinigen Abwicklung des Gewindegangs auf die Schnittebene H der Helix, die die Schraubenmittelachse M beinhaltet.

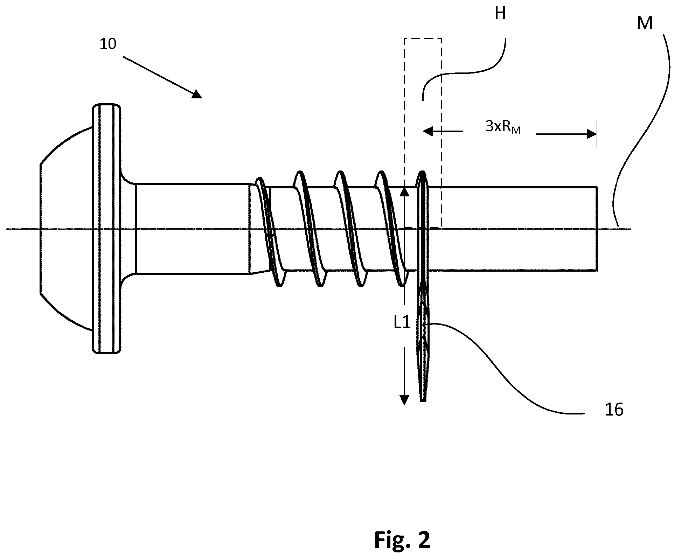

Fig. 2 zeigt die Schraube 10 in Seitenansicht mit der Schraubenmittelachse M. Der axiale Bereich der Schraube 10 vom Beginn des Gewindegangs 16 über eine axiale Länge von 3 x R_{M}, der dann über die Länge L1 abgewickelt ist. Ferner ist die Schnittebene H dargestellt, in der die Schraubenmittelachse M liegt.

Die perspektivische Darstellung der Abwicklung des Gewindegangs 16 ist in der Fig. 3a dargestellt. Die Abwicklung zeigt schematisch den Gewindegang 16 mit der Länge L1, wobei L1 der Länge des Gewindegangs 16 in der Abwicklung entspricht, die sich bei einer axialen Erstreckung von 3 x R_{M} ergibt. Der Radius R ist an verschiedenen Stellen des Gewindegangs 16 als Strichlinie dargestellt. So wird über die gesamte Länge des Hauptgewindes 18 der mittlere Gewinderadius ermittelt.

Die Fig.3 b zeigt die Vorderansicht der Abwicklung, die einer Schnittebene der Helix entspricht. So ergibt sich aus der Projektion auf die Schnittebene die Formprofilkontur 24 gemäß Fig. 3c mit einer maximalen Ausdehnung, die die wirksame Formprofilkontur 24 abbildet, die dann das Muttergewinde im Bauteil erzeugt.

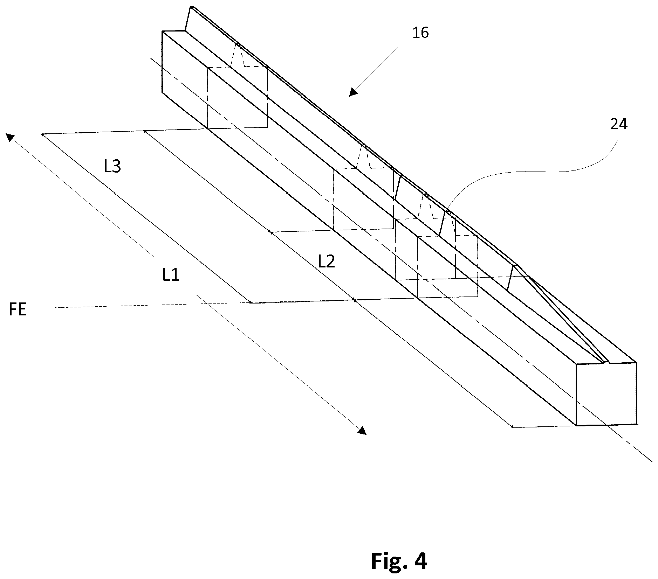

Der Formbereich F endet am Formbereichsende FE, also an der Stelle des Hauptgewindes 18, an der die dem Antrieb nächstliegende maximale Ausdehnung der Formprofilkontur 24 im Bereich von 85% des mittleren Gewinderadius in Radialrichtung nach außen noch vorliegt, bevor die nachfolgende Profilkontur im Bereich bis zum Ende von L1, also der korrespondierenden Länge des Gewindegangs zur Länge 3 x R_{M} in axialer Richtung wieder innerhalb der Formprofilkontur 24 liegt. Die Lage des Formbereichsendes FE ist in Fig. 4 dargestellt. An der Stelle FE ist die Formprofilkontur 24, ausgehend vom Beginn des Gewindes, letztmalig vorhanden, bevor die Profilkontur nach einem Übergangsbereich in die Tragprofilkontur 22 übergeht, die im vorliegenden Beispiel über die übrige Schraubenlänge des Hauptgewindes 18 beibehalten wird.

Die Tragprofilkontur 22 wird durch die Projektion des Teils des Gewindegangs 16 auf eine Schnittebene H der Helix entlang der Helix über einen sich axial erstreckenden Bereich gebildet, der bei einem axialen Abstand von 2/3 des mittleren Gewinderadius R_{M} zum Formbereichsende FE beginnt und bei einem axialen Abstand von 5/3 des mittleren Gewinderadius R_{M} vom Formbereichsende FE endet. Dieser Bereich bildet wenigstens einen Teilbereich des Tragbereichs T. In Fig. 4 ist der Bereich in der Abwicklung des Gewindes 18 dargestellt, der sich analog zu den angegebenen Abmessungen in Axialrichtung ergibt. So ist L2 die Länge des Gewindegangs 16, die sich aus der Abwicklung des axialen Bereichs von 2/3 x R_{M} ergibt. Die Länge L3 ist die Länge des Gewindegangs 16, die sich aus der Abwicklung des axialen Bereichs von 5/3 x R_{M} ergibt.

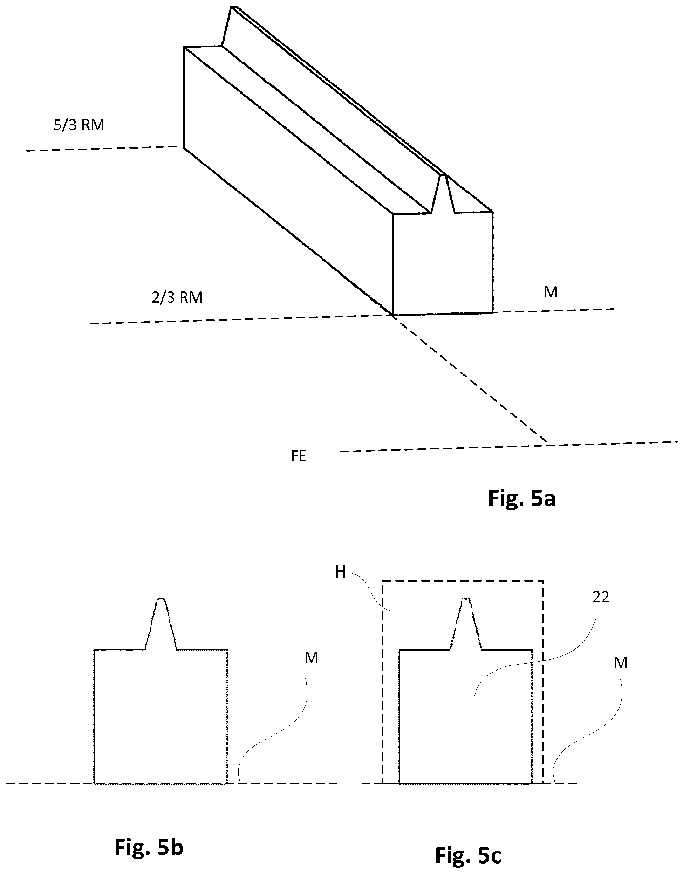

Indem der Bereich zur Ermittlung der Tragprofilkontur 22 bei 2/3 x R_{M} beginnt, ist auf diese Weise sichergestellt, dass ein möglichst kurzer Übergangsbereich vom Formbereich F zum Tragbereich T gewährleistet ist. Somit ist der Übergangsbereich in der Abwicklung kürzer als L2 und in axialer Richtung kleiner oder gleich 2/3 x R_{M}. Der Tragbereich T weist wenigstens eine Länge von L3 - L2 in der Abwicklung auf, sodass eine grundlegende Haltefunktion der Schraube erfüllt ist. Die Abwicklung des Teils des Gewindes 16, der den Tragbereich wenigstens teilweise bildet, ist in Fig. 5a dargestellt. Fig. 5b zeigt eine Vorderansicht der Abwicklung und Fig. 5c die entsprechende Projektion der Abwicklung auf die Schnittebene H der Helix, die die Tragprofilkontur 22 definiert. Die Vorderansicht und die Projektion sind im vorliegenden Fall identisch, da die Profilkontur im Tragbereich im vorliegenden Fall gleichbleibend der Tragprofilkontur 22 entspricht.

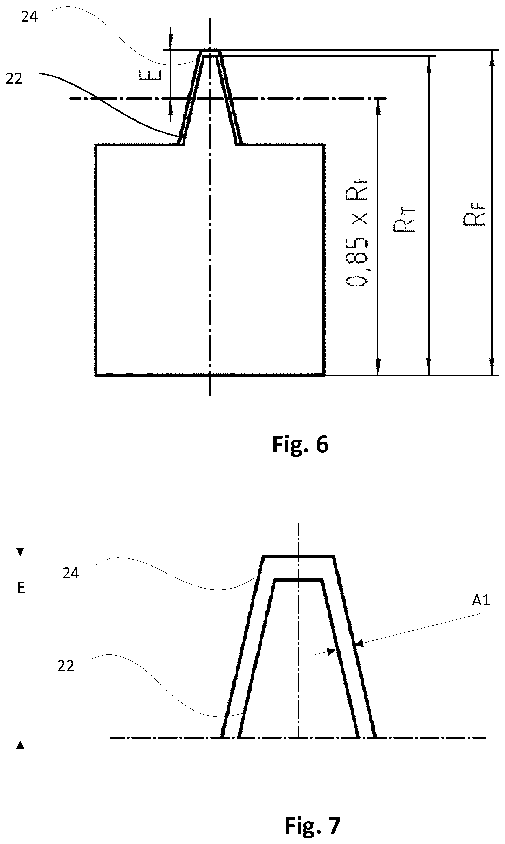

In Fig. 6 ist dargestellt, dass die Tragprofilkontur 22 und Formprofilkontur 24 so aufeinander abgestimmt sind, dass bei einer Überlagerung der Tragprofilkontur 22 und der Formprofilkontur 24 wenigstens in dem Bereich E, der sich von 85% des Formbereichsradius R_{F} in Radialrichtung nach außen erstreckt, die Tragprofilkontur 22 vollständig innerhalb der Formprofilkontur 24 liegt. Eine Vergrößerung des Bereichs E ist in Fig. 7 dargestellt. Der Abstand A1 zwischen den Flanken der Formprofilkontur 24 und der Tragprofilkontur 22 kann auf die Elastizität des Werkstoffes abgestimmt sein, beträgt aber bevorzugt beispielsweise bei einer Schraube mit einem Nenndurchmesser von 5 mm zwischen 0,03 mm und 0,05 mm, insbesondere 0,04 mm. Der Abstand bleibt bevorzugt wenigstens im Bereich E über die gesamte Flanke konstant.

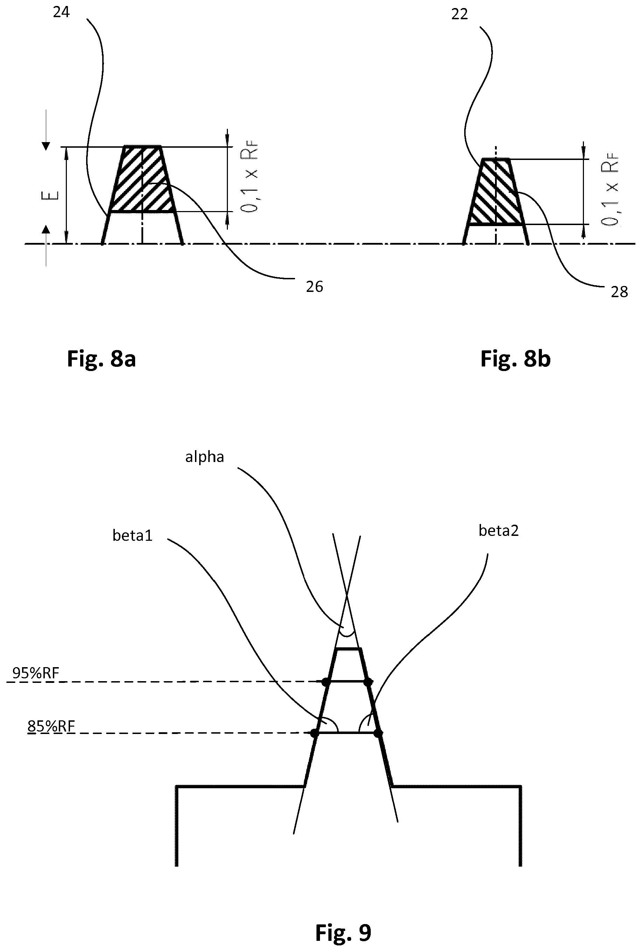

Fig. 8a zeigt eine Vergrößerung des Bereichs E der Formprofilkontur 24, die eine Formprofilfläche 26 begrenzt, die gemessen in einem Bereich von 10% des Formbereichsradius ausgehend vom maximalen orthogonalen Abstand der Formprofilkontur zur Schraubenmittelachse radial nach innen gebildet ist. Fig. 8b zeigt eine Vergrößerung des Bereichs E der Tragprofilkontur 22, wobei die Tragprofilkontur 22 eine Tragprofilfläche 28 begrenzt, die in einem Bereich von 10% des Formbereichsradius R_{F} ausgehend vom maximalen orthogonalen Abstand der Tragprofilkontur, der R_{T} entspricht, zur Schraubenmittelachse radial nach innen gemessen ist.

Erfindungsgemäß ist die Formprofilfläche 26 größer als die Tragprofilfläche 28. Dies hat den Vorteil, dass auch spitze Flankenwinkel realisiert werden können, ohne dass das Material, in das die Schraube eingeschraubt wird, übermäßig beansprucht und dabei eine hohe Auszugskraft bei niedrigem Eindrehmoment erzielt wird.

Der Flankenwinkel alpha der Formprofilkontur 24 wird, wie in Fig. 9 gezeigt, bestimmt. Er entspricht 180° abzüglich der Summe der Basiswinkel (beta 1, beta 2) eines Trapezes, das gebildet wird, indem die Grundseiten des Trapezes durch die zur Schraubenachse parallelen Schnittlinien bei 85% des Formprofilradius R_{F} und bei 95% des Formprofilradius R_{F} gebildet sind. Basiswinkel sind die Winkel an der längeren Grundseite des Trapezes, also bei der Schnittlinie bei 85%.

Der Flankenwinkel beträgt weniger als 35°, insbesondere zwischen 20° und 30°.

Die analoge Vorschrift zur Ermittlung des Flankenwinkels ergibt sich für die Tragprofilkontur 22, wobei hier die Schnittlinien bei 85% und 95% des Tragprofilradius R_{T} gelegt werden.

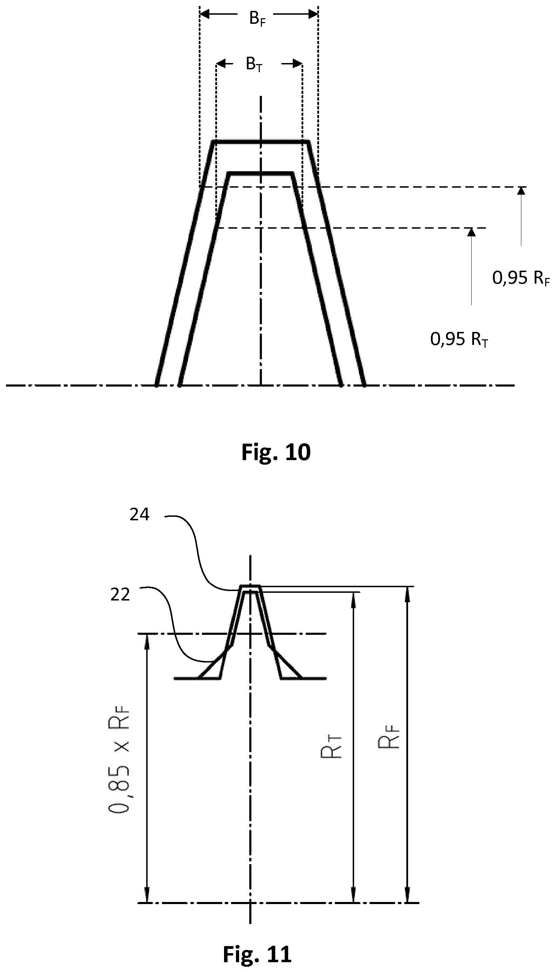

Fig. 10 zeigt den Vergleich der Breite B_{F} der Formprofilkontur bei 95% des Formradius und der Breite der Tragprofilkontur B_{T}. Die Breite B_{F} der Formprofilkontur 24 ist hierbei größer als die Breite B_{T} der Tragprofilkontur 22. Im Beispiel der Figur 10 ist die Breite B_{T} der Tragprofilkontur 22 etwa 10% kleiner als die Breite B_{F} der Formprofilkontur 24. Die Formprofilkontur 24 als auch die Tragprofilkontur 22 sind im vorliegenden Beispiel symmetrisch ausgeführt. Die Symmetrieachse ist die Orthogonale auf die Schraubenmittelachse M, die die Profilkontur 22, 24 in der halben Breite B_{T} bzw. B_{F} schneidet.

Fig. 11 zeigt eine weitere Ausgestaltung des Gewindes im Tragbereich T, wobei der Übergang von der Gewindeflanke in den Gewindegrund flacher verläuft als dies in den vorangehend beschriebenen Figuren der Fall ist. Demzufolge liegt die Tragprofilkontur 22 im Bereich radial innerhalb von 85% des Formbereichsradius wenigstens teilweise außerhalb der Formbereichskontur 24.

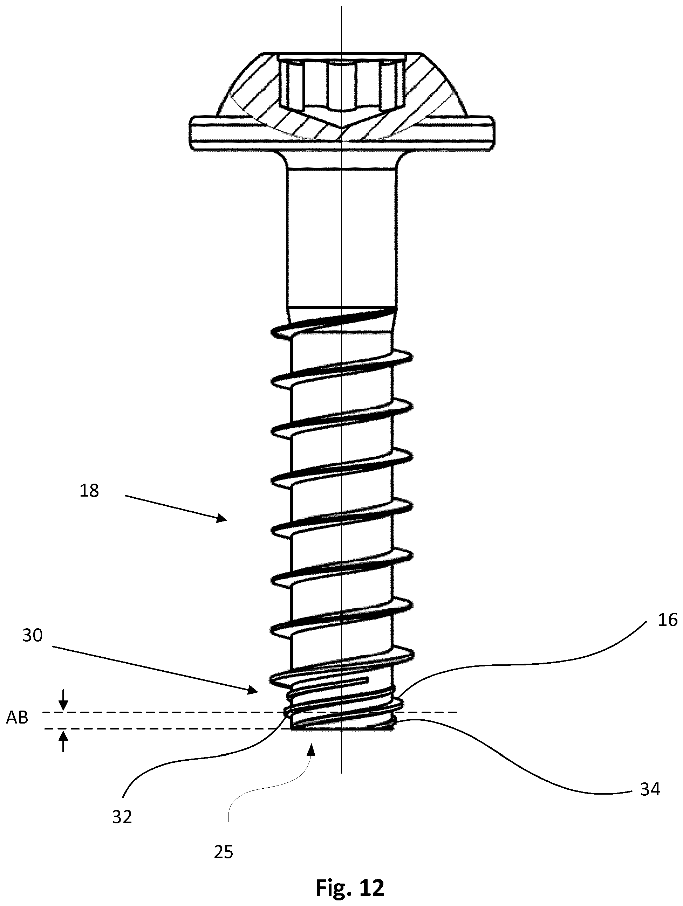

Fig. 12 zeigt eine weitere Ausgestaltung einer erfindungsgemäßen Schraube, wobei der Schaft ferner am freien Ende des Schraubenschaftes ein Ansetzgewinde 30 aufweist. Das Ansetzgewinde umfasst wenigstens zwei Ansetzgewindegänge 32, 34, die in ihrem Radius höchstens 90% des Formbereichsradius R_{F} erreichen und einen Ansetzbereich AB bilden, in welchem die Ansetzgewindegänge 32, 34 den gleichen Radiusverlauf über ihre zugeordnete Helix aufweisen und zudem der Gewinderadius des Hauptgewindes kleiner oder gleich dem Gewinderadius der Ansetzgewindegänge im gleichen axialen Abstand zum freien Ende 25 der Schraube ist.

Im vorliegenden Beispiel weist der Gewindegang 16 des Hauptgewindes 18 im Ansetzbereich bei gleichem axialen Abstand zum freien Ende der Schraube den gleichen Gewinderadius R auf wie das Ansetzgewinde 30. Die Ansetzgewindegänge 32, 34 beginnen unmittelbar am freien Ende 25 des Schraubenschaftes am Kern. Dies sorgt dafür, dass sofort mit dem ersten Ansetzen der Schraube eine ideale Führung der Schraube erreicht ist. Das Ansetzgewinde 30 erstreckt sich im vorliegenden Beispiel über etwa eine Windung, wobei der Ansetzbereich bei etwa einem Drittel einer Windung endet.

Der Durchmesser des freien Endes des Schraubenschaftes entspricht im vorliegenden Beispiel etwa wenigstens 65% des doppelten Formbereichsradius R_{F}.

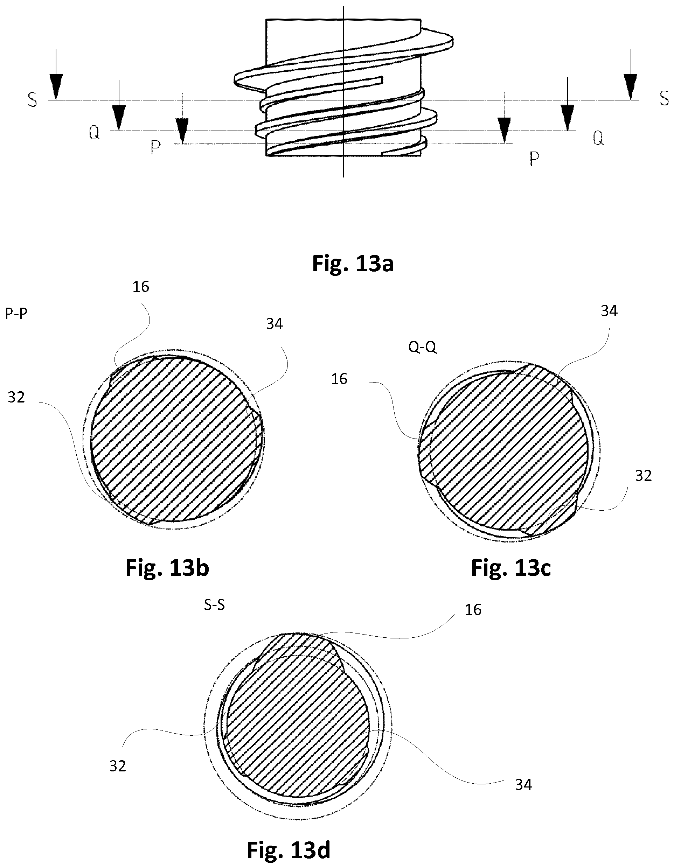

Der Ansetzbereich ist in den Figuren 13a bis 13d näher beschrieben.

Fig. 13a zeigt eine vergrößerte Seitenansicht des freien Endes 25 des Schraubenschafts mit drei Querschnittslinien. Die erste Querschnittslinie P-P liegt in der Mitte des Ansetzbereichs AB. Die Querschnittslinie Q-Q liegt am Ende des Ansetzbereichs AB und die Querschnittslinie S-S oberhalb des Ansetzbereichs. Fig. 13b zeigt den Querschnitt an der Querschnittslinie P-P. In Fig. 13b ist gut zu erkennen, dass alle Gewinde im Ansetzbereich, nämlich die beiden Ansetzgewinde 32, 34 und der Gewindegang 16 den gleichen Gewinderadius aufweisen. Das gleiche gilt für Fig. 13c am Ende des Ansetzbereichs, bei welchem immer noch alle vorliegenden Gewindegänge 16, 32, 34 im gleichen axialen Abstand zum freien Ende der Schraubenachse denselben Gewinderadius R besitzen.

Fig. 13d verdeutlicht schließlich im Querschnitt an der Querschnittslinie S-S die Gewinderadien der beiden Ansetzgewinde 32, 34 und des Gewindegangs 16 des Hauptgewindes außerhalb des Ansetzbereichs AB. In diesem Bereich sind die Gewinderadien R der Ansetzgewinde 32, 34 deutlich kleiner als der Gewinderadius des Gewindegangs 16 des Hauptgewindes18 an dieser Querschnittslinie. Die Ansetzgewinde laufen im vorliegenden Beispiel nach dem Ansetzbereich sanft aus, wohingegen der Hauptgewindegang weiter bis zum Erreichen seiner Formprofilkontur weiter anwächst.

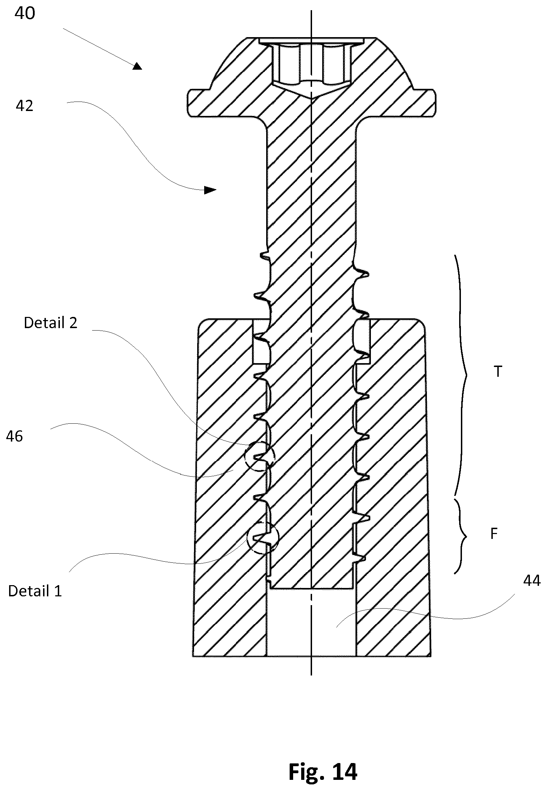

Fig. 14 zeigt eine Schnittansicht beim Erstellen einer Schraubverbindung 40.

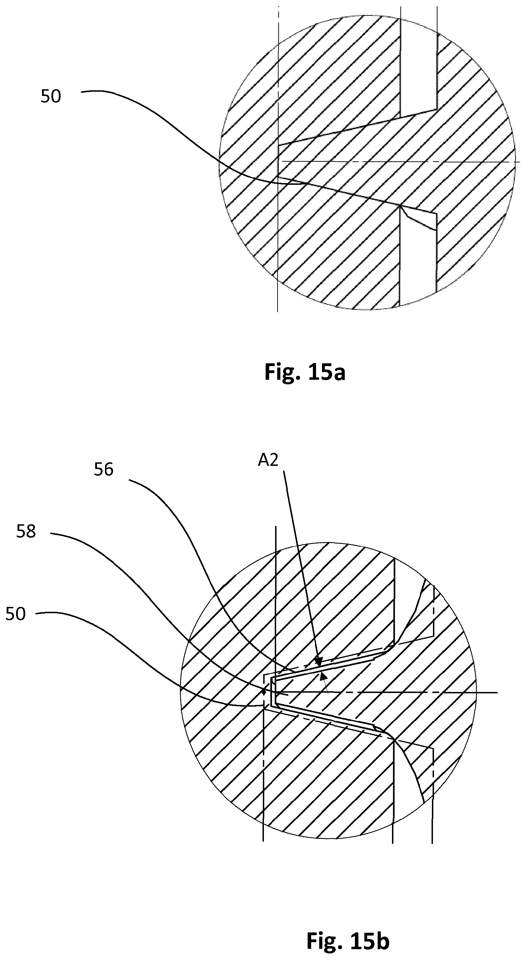

Die Schraubverbindung 40 umfasst eine Schraube 42 und ein mit einem Vorloch 44 versehenes Kunststoffbauteil 46. Durch den vorderen Formbereich F der Schraube 42 wird ein Gewindegang im Kunststoffbauteil 46 vorgefurcht, in den dann der nachfolgende Tragbereich T des Gewindegangs eingreift. So ist ein Detail 1 in Fig. 15a dargestellt, das den Eingriff des Gewindes im Formbereich F zeigt und das Detail 2, das den Eingriff des Gewindes im Tragbereich des Hauptgewindes zeigt.

Die Formprofilkontur 50 ist in Fig. 15a gezeigt. Das nachfolgende Gewinde mit der Tragprofilkontur 58 im Tragbereich der Schraube ist in Fig. 15b in der Detaildarstellung dargestellt. In der Detaildarstellung von Fig. 15b ist der Gewindegang im Muttergewinde in seinem rückgefederten Zustand mit der Konturlinie 56 dargestellt. Die Gewindeflanken der Tragprofilkontur 58 sind hier trotz der Rückfederung des Muttergewindes noch im Abstand A2 von dem rückgefederten Muttergewinde beabstandet. Auf diese Weise kann das Gewinde des Tragbereichs nahezu reibungsfrei in das Muttergewinde eingeschraubt werden. Erst durch das endgültige Anziehen der Schraube 42 wird das Gewinde im Tragbereich an die Flanke des Muttergewindes angepresst und stellt eine kraftschlüssige Verbindung in Drehrichtung her. Indem die Fläche des Spitzenbereichs der Tragprofilkontur 58 geringer ist als die Fläche der Formprofilkontur 50, kann sowohl ein niedriges Eindrehmoment als auch eine hohe Auszugsfestigkeit gewährleistet werden, da eine Materialschädigung des Kunststoffmaterials vermieden wird und dennoch ein ausreichender Abstand der Gewindeflanken zwischen dem rückgefederten Muttergewinde und dem Gewinde im Tragbereich gegeben ist.

## Patentansprüche

1. Schraube (10) aufweisend eine Schraubenmittelachse (M), umfassend einen Antrieb (12) und einen gewindetragenden Schaft (14), aufweisend einen Gewindegang (16), der sich wenigstens bereichsweise in einer Helix konstanter Steigung entlang des Schafts erstreckt und ein Hauptgewinde (18) bildet, das einen mittleren Gewinderadius (R_{M}) besitzt, der dem durchschnittlichen Gewinderadius über die gesamte Länge des Hauptgewindes (18) entspricht, wobei der Gewinderadius (R) der maximale orthogonale Abstand von der Schraubenachse (M) zur Profilkontur (20) des Gewindegangs ist, wobei das Hauptgewinde (18) einen Tragbereich (T) und einen Formbereich (F) aufweist, wobei sich im Formbereich (F) eine Formprofilkontur (24) mit einem Formbereichsradius (R_{F}), der dem maximalen orthogonalen Abstand der Formprofilkontur(24) zur Schraubenmittelachse entspricht, und im Tragbereich (T) eine Tragprofilkontur (22) mit einem Tragbereichsradius (R_{T}) ergibt, wobei die Formprofilkontur (24) durch die Projektion des Gewindegangs entlang der Helix über einen sich axial erstreckenden Bereich einer Länge von dreimal dem mittleren Gewinderadius (R_{M}) ausgehend vom freien Ende (25) des Schafts auf eine Schnittebene (H) der Helix definiert ist, wobei der Formbereich (F) an einem Formbereichsende (FE) endet, nämlich an der Stelle der Helix, an der die dem Antrieb (12) nächstliegende Formprofilkontur (24) im Bereich ausgehend von 85% des mittleren Gewinderadius in Radialrichtung nach außen vorliegt und die dem Formbereichsende (FE) nachfolgende Profilkontur (20) wieder innerhalb der Formprofilkontur (24) liegt, wobei die Tragprofilkontur (22) durch die Projektion des Gewindegangs entlang der Helix auf eine Schnittebene (H) der Helix in einem Bereich definiert ist, der bei einem axialen Abstand von 2/3 x mittlerer Gewinderadius (R_{M}) zum Formbereichsende (FE) beginnt und bei einem axialen Abstand 5/3 x mittlerer Gewinderadius (R_{M}) endet und dass bei einer Überlagerung der Tragprofilkontur (22) und der Formprofilkontur (24), wenigstens in dem Bereich, der sich von 85% des Formbereichsradius (R_{F}) in Radialrichtung nach außen erstreckt, vollständig innerhalb der Formprofilkontur (24) liegt, **dadurch gekennzeichnet, dass** eine Formprofilfläche (26), die durch die Formprofilkontur (24) begrenzt ist, gemessen in einem Bereich von 10% des Formbereichsradius (R_{F}) ausgehend vom maximalen orthogonalen Abstand der Formprofilkontur (24) zur Schraubenmittelachse radial nach innen, größer ist als eine Tragprofilfläche (28), die durch die Tragprofilkontur (22) begrenzt ist, gemessen in einem Bereich von 10% des Formbereichsradius (R_{F}) ausgehend vom maximalen orthogonalen Abstand der Tragprofilkontur (22) zur Schraubenmittelachse radial nach innen.

2. Schraube nach Anspruch 1, **dadurch gekennzeichnet, dass** die Formprofilkontur (24) und die Tragprofilkontur (22) einen Flankenwinkel (alpha) von weniger als 35° aufweisen.

3. Schraube nach Anspruch 1 oder 2, **dadurch gekennzeichnet, dass** der Tragbereichsradius (R_{T}) zwischen 1% bis 3% kleiner als der Formbereichsradius (R_{F}) ist.

4. Schraube nach einem der Ansprüche 1 bis 3, **dadurch gekennzeichnet, dass** die Tragprofilkontur (22) bei 95% des Tragbereichsradius (R_{T}) eine Breite (B_{T}) aufweist, die kleiner ist als die Breite (B_{F}) der Formprofilkontur (24) bei 95% des Formbereichsradius (R_{F}).

5. Schraube nach Anspruch 4, **dadurch gekennzeichnet, dass** die Breite (B_{T}) der Tragprofilkontur (22) wenigstens 10%, insbesondere wenigstens 20% kleiner als die Breite (B_{F}) der Formprofilkontur (24) ist.

6. Schraube nach einem der vorangehenden Ansprüche, **dadurch gekennzeichnet, dass** Formprofilkontur (24) und / *oder* die Tragprofilkontur (22) symmetrisch ist / sind.

7. Schraube nach einem der vorangehenden Ansprüche, **dadurch gekennzeichnet, dass** die Formprofilkontur (24) über eine Länge von weniger als zweimal der Steigung nicht weiter zunimmt.

8. Schraube nach einem der vorangehenden Ansprüche, **dadurch gekennzeichnet, dass** das Verhältnis von Kerndurchmesser zu zweimal dem mittleren Gewinderadius (R_{M}) 0,6 bis 0,8 beträgt.

9. Schraube nach einem der vorangehenden Ansprüche, **dadurch gekennzeichnet, dass** in dem Bereich, der sich radial innerhalb von 85% des Formbereichsradius (R_{F}) erstreckt, die Tragprofilkontur (22) wenigstens teilweise außerhalb der Formprofilkontur (24) liegt.

10. Schraube nach einem der vorangehenden Ansprüche, **dadurch gekennzeichnet, dass** der Kerndurchmesser im Formbereich kleiner oder gleich dem Kerndurchmesser im Tragbereich (T) ist.

11. Schraube nach einem der vorangehenden Ansprüche, **dadurch gekennzeichnet, dass** der Schaft im Bereich des freien Endes (25) des Schraubenschaftes ein Ansetzgewinde (30) aufweist, wobei das Ansetzgewinde (30) wenigstens zwei Ansetzgewindegänge (32, 34) umfasst, die in ihrem Radius höchstens 90% des Formbereichsradius (R_{F}) erreichen und einen Ansetzbereich (AB) bilden, in welchem die Ansetzgewindegänge (32, 34) den gleichen Radiusverlauf aufweisen und zudem im Ansetzbereich (AB) der Gewinderadius des Hauptgewindes (18) kleiner oder gleich dem Gewinderadius der Ansetzgewindegänge (32, 34) ist.

12. Schraube nach Anspruch 11, **dadurch gekennzeichnet, dass** das Hauptgewinde (18) im Ansetzbereich (AB) den gleichen Gewinderadius (R) wie das Ansetzgewinde (32, 34) aufweist.

13. Schraube nach Anspruch 11, **dadurch gekennzeichnet, dass** wenigstens drei Ansetzgewindegänge (32, 34) vorgesehen sind, wobei der Gewinderadius (R) des Hauptgewindes (18) im Ansetzbereich (AB) kleiner als der des Ansetzgewindes ist.

14. Schraube nach einem der Ansprüche 11 bis 13, **dadurch gekennzeichnet, dass** die Ansetzgewindegänge (32, 34) am Kern beginnen und sich in ihrem Gewinderadius (R) in Richtung des Tragbereichs (T) stetig vergrößern.

15. Schraube nach einem der Ansprüche 11 bis 14, **dadurch gekennzeichnet, dass** die Gewindegänge (16, 32, 34) mit gleichem Gewinderadius (R) im Ansetzbereich (AB) umfänglich gleichverteilt sind.

16. Schraube nach einem der Ansprüche 11 bis 15, **dadurch gekennzeichnet, dass** der Kerndurchmesser des freien Endes der Schraube wenigstens 20% oder wenigstens 30% oder wenigstens 40%,oder wenigstens 50% oder wenigstens 60 % des doppelten Formbereichsradius beträgt.

17. Schraube nach einem der Ansprüche 11 bis 16, **dadurch gekennzeichnet, dass** alle Gewindegänge (16, 32, 34) im Ansetzbereich (AB) ihren Anfang in derselben Querschnittsebene haben.

18. Schraube nach einem der Ansprüche 11 bis 17, **dadurch gekennzeichnet, dass** alle Gewindegänge (16, 32, 34) im Ansetzbereich (AB) die gleiche Profilkontur aufweisen.

19. Schraube nach einem der Ansprüche 11 bis 18, **dadurch gekennzeichnet, dass** das Ansetzgewinde (30) unmittelbar ans freie Schaftende (25) anschließt.

20. Schraube nach einem der Ansprüche 11 bis **19, dadurch gekennzeichnet, dass** das Ansetzgewinde (30) beabstandet zum freien Schaftende (25) beginnt.

21. Schraube nach einem der Ansprüche 11 bis 19, **dadurch gekennzeichnet, dass** das Ansetzgewinde (30) und das Hauptgewinde (18) gewalzte Gewinde sind.

22. Schraube nach einem der Ansprüche 11 bis 21, **dadurch gekennzeichnet, dass** die Gewinde im Ansetzbereich (30) einen stumpferen Flankenwinkel haben als das Hauptgewinde (18) außerhalb des Ansetzbereichs (AB).

23. Schraube nach einem der Ansprüche 11 bis 22, **dadurch gekennzeichnet, dass** das Ansetzgewinde (30) abrupt ausläuft.

24. Schraube nach einem der Ansprüche 11 bis 23, **dadurch gekennzeichnet, dass** das Ansatzgewinde (30) sich höchstens über zwei Windungen erstreckt.

25. Verfahren zur Herstellung einer Schraubverbindung, umfassend eine Schraube (10, 42) nach einem der vorangehenden Ansprüche 1 bis 24, **dadurch gekennzeichnet, dass** die Schraube (42) in ein Vorloch (44) in einem Bauteil (46) aus Kunststoff eingedreht wird, wobei im Formbereich (F) ein Gegengewinde mit der Formprofilkontur (50) in den Kunststoff eingeformt wird, worauf das Gegengewinde im Tragbereich wieder zurückfedert, so dass dieses während des Einschraubvorgangs gerade nicht in Anlage mit dem Gewinde im Tragbereich (T) kommt, und das Gewinde im Tragbereich (T) erst mit Anziehen der Schraube im Bauteil gegen das Gegengewinde gedrückt wird.

26. Verfahren nach Anspruch 25, **dadurch gekennzeichnet, dass** der Radius des Vorlochs 80% des Formbereichsradius entspricht.

27. Schraubverbindung (40) umfassend eine Schraube (42) und ein Bauteil (46) aus Kunststoff, die nach dem Verfahren gemäß Anspruch 25 und / oder 26 hergestellt ist.

## Claims

1. Screw (10) having a screw central axis (M), comprising a drive (12) and a threaded shank (14), having a thread (16) which extends in some regions at least in a helix of constant pitch along the shank and forms a main thread (18) which has an average thread radius (R_{M}) that corresponds to the average thread radius over the entire length of the main thread (18), the thread radius (R) being the maximum orthogonal distance from the screw axis (M) to the profile contour (20) of the thread, the main thread (18) having a bearing area (T) and a forming area (F), wherein, in the forming area (F), there is a forming profile contour (24) having a forming area radius (R_{F}) which corresponds to the maximum orthogonal distance of the forming profile contour (24) to the screw central axis, and in the bearing area (T), there is a bearing profile contour (22) having a bearing area radius (R_{T}), wherein the forming profile contour (24) is defined by the projection of the thread turn along the helix over an axially extending area having a length of three times the mean thread radius (R_{M}) starting from the free end (25) of the shank onto a section plane (H) of the helix, wherein the forming area (F) ends at a forming area end (FE), i.e. at the point of the helix where the forming profile contour (24) closest to the drive (12) in the area starting from 85% of the mean thread radius lies outwards in the radial direction, and the profile contour (20) following the end of the forming area (FE) lies again within the forming profile contour (24), the bearing profile contour (22) being defined by the projection of the thread turn along the helix onto a section plane (H) of the helix in an area which begins at an axial distance of 2/3 times the mean thread radius (R_{M}) from the forming area end (FE) and ends at an axial distance of 5/3 times the mean thread radius (R_{M}), and that, when the bearing profile contour (22) and the forming profile contour (24) overlap, at least in the area which extends radially outwards from 85% of the forming area radius (RF), lies completely within the forming profile contour (24), **characterized in that** a forming profile surface (26) which is delimited by the forming profile contour (24), measured within 10% of the forming area radius (R_{F}) starting from the maximum orthogonal distance of the forming profile contour (24) to the screw central axis radially inwards, is larger than a bearing profile surface (28) which is delimited by the bearing profile contour (22), measured within 10% of the forming area radius (R_{F}), starting from the maximum orthogonal distance of the bearing profile contour (22) from the screw central axis radially inwards.

2. Screw according to claim 1, **characterized in that** the forming profile contour (24) and the bearing profile contour (22) have a flank angle (alpha) of less than 35°.

3. Screw according to any one of claims 1 or 2 above, **characterized in that** the bearing area radius (R_{T}) is smaller by between 1% and 3% than the forming area radius (R_{F}).

4. Screw according to any one of claims 1 to 3 above, **characterized in that** the bearing profile contour (22) has a width (B_{T}) at 95% of the bearing area radius (R_{T}) which is smaller than the width (B_{F}) of the forming profile contour (24) at 95% of the forming area radius (R_{F}).

5. Screw according to claim 4, **characterized in that** the width (B_{T}) of the bearing profile contour (22) is smaller by at least 10%, in particular by at least 20%, than the width (B_{F}) of the forming profile contour (24).

6. Screw according to any one of the preceding claims, **characterized in that** the forming profile contour (24) and/or the bearing profile contour (22) is/are symmetrical.

7. Screw according to any one of the preceding claims, **characterized in that** the forming profile contour (24) does not increase further over a length of less than twice the pitch.

8. Screw according to any one of the preceding claims, **characterized in that** the ratio of the core diameter to twice the mean thread radius (R_{M}) is between 0.6 and 0.8.

9. Screw according to any one of the preceding claims, **characterized in that** in the area which extends radially within 85% of the forming area radius (R_{F}), the bearing profile contour (22) lies at least partially outside the forming profile contour (24).

10. Screw according to any one of the preceding claims, **characterized in that** the core diameter in the forming area is smaller than or equal to the core diameter in the bearing area (T).

11. Screw according to any one of the preceding claims, **characterized in that** the shank has a setting thread (30) in the area of the free end (25) of the screw shank, which setting thread (30) comprises at least two setting thread turns (32, 34), which in their radius reach at most 90% of the forming area radius (R_{F}) and form a setting area (AB) in which the setting thread turns (32, 34) have the same radius profile and, moreover, in the setting area (AB), the thread radius of the main thread (18) is smaller than or equal to the thread radius of the setting thread turns (32, 34).

12. Screw according to claim 11, **characterized in that** in the setting area (AB), the main thread (18) has the same thread radius (R) as the setting thread (32, 34).

13. Screw according to claim 11, **characterized in that** at least three setting threads (32, 34) are provided, with the thread radius (R) of the main thread (18) in the setting area (AB) being smaller than that of the setting thread.

14. Screw according to any one of claims 11 to 13 above, **characterized in that** the setting threads (32, 34) start at the core and increase continuously in their thread radius (R) in the direction of the bearing area (T).

15. Screw according to any one of claims 11 to 14 above, **characterized in that,** in the setting area (AB), the thread turns (16, 32, 34) having the same thread radius (R) are evenly distributed around the circumference.

16. Screw according to any one of claims 11 to 15 above, **characterized in that** the core diameter of the free end of the screw is at least 20%, or at least 30%, or at least 40%, or at least 50%, or at least 60% of twice the forming area radius.

17. Screw according to any one of claims 11 to 16 above, **characterized in that** all the thread turns (16, 32, 34) in the setting area (AB) have their start in the same cross-sectional plane.

18. Screw according to any one of claims 11 to 17 above, **characterized in that** all the threads (16, 32, 34) in the setting area (AB) have the same profile contour.

19. Screw according to any one of claims 11 to 18 above, **characterized in that** the setting thread (30) directly adjoins the free shank end (25).

20. Screw according to any one of claims 11 to 19 above, **characterized in that** the setting thread (30) starts at a distance from the free shank end (25).

21. Screw according to any one of claims 11 to 19 above, **characterized in that** the setting thread (30) and the main thread (18) are rolled threads.

22. Screw according to any one of claims 11 to 21 above, **characterized in that** the threads in the setting area (30) have a blunter flank angle in the contact area (30) than the main thread (18) outside the setting area (AB).

23. Screw according to any one of claims 11 to 22 above, **characterized in that** the setting thread (30) runs out abruptly.

24. Screw according to any one of claims 11 to 23 above, **characterized in that** the setting thread (30) extends over a maximum of two turns.

25. Method of making a screw connection comprising a screw (10, 42) of the type specified in any one of claims 1 to 24 above, **characterized in that** the screw (42) is screwed into a pilot hole (44) in a plastic component (46), with a mating thread with the forming profile contour (50) being formed into the plastic in the forming area (F), whereupon the mating thread springs back again in the bearing area so that it does not come into contact with the thread in the bearing area (T) during the screwing-in process, and the thread in the bearing area (T) is only pressed against the mating thread when the screw is tightened in the component.

26. Method according to claim 25, **characterized in that** the radius of the pilot hole corresponds to 80% of the forming area radius.

27. Screw connection (40) comprising a screw (42) and a plastic component (46), which screw is manufactured using the method specified in claims 25 and/or 26 above.

## Revendications

1. Vis (10) présentant un axe médian de vis (M), comprenant un entraînement (12) et une tige (14) filetée, présentant un filet (16), qui s'étend au moins par endroits en une hélice de pas constant le long de la tige et forme un filetage principal (18), qui possède un rayon de filetage moyen (R_{M}) qui correspond au rayon de filetage en moyenne sur toute la longueur du filetage principal (18), dans laquelle le rayon de filetage (R) est la distance orthogonale maximale à partir de l'axe de vis (M) vers le contour profilé (20) du filet, dans laquelle le filetage principal (18) présente une zone de support (T) et une zone de formage (F), dans laquelle un contour profilé de formage (24) avec un rayon de zone de formage (R_{F}) qui correspond à la distance orthogonale maximale du contour profilé de formage (24) par rapport à l'axe médian de vis est obtenu dans la zone de formage (F), et un contour profilé de support (22) avec un rayon de zone de support (R_{T}) dans la zone de support (T), dans laquelle le contour profilé de formage (24) est défini par la projection du filet le long de l'hélice sur une zone s'étendant axialement d'une longueur de trois fois le rayon de filetage moyen (R_{M}) à partir de l'extrémité libre (25) de la tige sur un plan de coupe (H) de l'hélice, dans laquelle la zone de formage (F) termine sur une extrémité de zone de formage (FE), à savoir à l'endroit de l'hélice où le contour profilé de formage (24) le plus proche de l'entraînement (12) est présent dans la zone à partir de 85 % du rayon de filetage moyen dans la direction radiale vers l'extérieur et le contour profilé (20) suivant l'extrémité de zone de formage (FE) se situe à nouveau à l'intérieur du contour profilé de formage (24), dans laquelle le contour profilé de support (22) est défini par la projection du filet le long de l'hélice sur un plan de coupe (H) de l'hélice dans une zone qui commence à une distance axiale de 2/3 x le rayon de filetage moyen(R_{M}) par rapport à l'extrémité de zone de formage (FE) et termine à une distance axiale de 5/3 x le rayon de filetage moyen (R_{M}) et que dans le cas d'une superposition du contour profilé de support (22) et du contour profilé de formage (24), au moins dans la zone qui s'étend dans la direction radiale vers l'extérieur à partir de 85 % du rayon de zone de formage (R_{F}), se situe entièrement à l'intérieur du contour profilé de formage (24), **caractérisée en ce qu'**une surface profilée de formage (26), qui est délimitée par le contour profilé de formage (24), mesurée dans une zone de 10 % du rayon de zone de formage (R_{F}) à partir de la distance orthogonale maximale du contour profilé de formage (24) par rapport à l'axe médian de vis radialement vers l'intérieur, est plus grande qu'une surface profilée de support (28) qui est délimitée par le contour profilé de support (22), mesurée dans une zone de 10 % du rayon de zone de formage (R_{F}) à partir de la distance orthogonale maximale du contour profilé de support (22) par rapport à l'axe médian de vis radialement vers l'intérieur.

2. Vis selon la revendication 1, **caractérisée en ce que** le contour profilé de formage (24) et le contour profilé de support (22) présentent un angle de flanc (alpha) inférieur à 35°.

3. Vis selon la revendication 1 ou 2, **caractérisée en ce que** le rayon de zone de support (R_{T}) est entre 1 % à 3 % inférieur au rayon de zone de formage (R_{F}).

4. Vis selon l'une quelconque des revendications 1 à 3, **caractérisée en ce que** le contour profilé de support (22) présente à 95 % du rayon de zone de support (R_{T}) une largeur (B_{T}) qui est inférieure à la largeur (B_{F}) du contour profilé de formage (24) à 95 % du rayon de zone de formage (R_{F}).

5. Vis selon la revendication 4, **caractérisée en ce que** la largeur (B_{T}) du contour profilé de support (22) est au moins 10 %, en particulier au moins 20 % inférieure à la largeur (BF) du contour profilé de formage (24).

6. Vis selon l'une quelconque des revendications précédentes, **caractérisée en ce que** le contour profilé de formage (24) et/ou le contour profilé de support (22) est/sont symétriques.

7. Vis selon l'une quelconque des revendications précédentes, **caractérisée en ce que** le contour profilé de formage (24) n'augmente pas plus d'une longueur de moins de deux fois le pas.

8. Vis selon l'une quelconque des revendications précédentes, **caractérisée en ce que** le rapport du diamètre du noyau à deux fois le rayon de filetage moyen (R_{M}) est égal à 0,6 à 0,8.

9. Vis selon l'une quelconque des revendications précédentes, **caractérisée en ce que** dans la zone qui s'étend radialement à l'intérieur de 85 % du rayon de zone de formage (R_{F}), le contour profilé de support (22) se situe au moins en partie à l'extérieur du contour profilé de formage (24).

10. Vis selon l'une quelconque des revendications précédentes, **caractérisée en ce que** le diamètre du noyau dans la zone de formage est inférieur ou égal au diamètre du noyau dans la zone de support (T).

11. Vis selon l'une quelconque des revendications précédentes, **caractérisée en ce que** la tige dans la zone de l'extrémité libre (25) de la tige de vis présente un filetage de départ (30), dans laquelle le filetage de départ (30) comprend au moins deux filets de départ (32, 34), qui atteignent dans leur rayon au plus 90 % du rayon de zone de formage (R_{F}) et forment une zone de départ (AB) dans laquelle les filets de départ (32, 34) présentent la même variation de rayon et en outre dans la zone de départ (AB) le rayon de filetage du filetage principal (18) est inférieur ou égal au rayon de filetage des filets de départ (32, 34).

12. Vis selon la revendication 11, **caractérisée en ce que** le filetage principal (18) dans la zone de départ (AB) présente le même rayon de filetage (R) que le filetage de départ (32, 34).

13. Vis selon la revendication 11, **caractérisée en ce qu'**au moins trois filets de départ (32, 34) sont prévus, dans laquelle le rayon de filetage (R) du filetage principal (18) dans la zone de départ (AB) est inférieur à celui du filetage de départ.

14. Vis selon l'une quelconque des revendications 11 à 13, **caractérisée en ce que** les filets de départ (32, 34) commencent sur le noyau et augmentent progressivement dans leur rayon de filetage (R) en direction de la zone de support (T).

15. Vis selon l'une quelconque des revendications 11 à 14, **caractérisée en ce que** les filets (16, 32, 34) avec le même rayon de filetage (R) sont équirépartis sur la périphérie dans la zone de départ (AB).

16. Vis selon l'une quelconque des revendications 11 à 15, **caractérisée en ce que** le diamètre du noyau de l'extrémité libre de la vis est égal à au moins 20 % ou au moins 30 % ou au moins 40 %, ou au moins 50 % ou au moins 60 % du double du rayon de zone de formage.

17. Vis selon l'une quelconque des revendications 11 à 16, **caractérisée en ce que** tous les filets (16, 32, 34) dans la zone de départ (AB) débutent dans le même plan de section transversale.

18. Vis selon l'une quelconque des revendications 11 à 17, **caractérisée en ce que** tous les filets (16, 32, 34) dans la zone de départ (AB) présentent le même contour profilé.

19. Vis selon l'une quelconque des revendications 11 à 18, **caractérisée en ce que** le filetage de départ (30) est directement adjacent à l'extrémité de tige libre (25).

20. Vis selon l'une quelconque des revendications 11 à 19, **caractérisée en ce que** le filetage de départ (30) commence à distance de l'extrémité de tige libre (25).

21. Vis selon l'une quelconque des revendications 11 à 19, **caractérisée en ce que** le filetage de départ (30) et le filetage principal (18) sont des filetages laminés.

22. Vis selon l'une quelconque des revendications 11 à 21, **caractérisée en ce que** les filetages dans la zone de départ (30) ont un angle de flanc plus obtus que le filetage principal (18) à l'extérieur de la zone de départ (AB).

23. Vis selon l'une quelconque des revendications 11 à 22, **caractérisée en ce que** le filetage de départ (30) se termine brusquement.

24. Vis selon l'une quelconque des revendications 11 à 23, **caractérisée en ce que** le filetage de départ (30) s'étend au plus sur deux spires.

25. Procédé pour la fabrication d'une liaison vissée, comprenant une vis (10, 42) selon l'une quelconque des revendications précédentes 1 à 24, **caractérisé en ce que** la vis (42) est vissée dans un avant-trou (44) dans une pièce (46) en matière plastique, dans lequel un contre-filetage est formé dans la matière plastique avec le contour profilé de formage (50) dans la zone de formage (F), à la suite de quoi le contre-filetage revient élastiquement dans la zone de support, de sorte que celui-ci pendant le processus de vissage ne vient pas en contact avec le filetage dans la zone de support (T), et le filetage dans la zone de support (T) n'est pressé contre le contre-filetage que lorsque la vis est serrée dans la pièce.

26. Procédé selon la revendication 25, **caractérisé en ce que** le rayon de l'avant-trou correspond à 80 % du rayon de zone de formage.

27. Liaison vissée (40) comprenant une vis (42) et une pièce (46) en matière plastique, qui est obtenue d'après le procédé selon la revendication 25 et/ou 26.
